# EUROPÄISCHE PATENTSCHRIFT

(11) **EP 3 703 194 B1**
(45) Veröffentlichungstag und Bekanntmachung des Hinweises auf die Patenterteilung: **07.09.2022**
(21) Anmeldenummer: 20159459.5
(22) Anmeldetag: 26.02.2020
(51) Int. Cl.: H01R 13/622, H01R 13/533, H01R 13/66

(54) **SPEICHERVORRICHTUNG ZUR MOBILEN BEREITSTELLUNG VON DATEN AN EINER TECHNISCHEN EINRICHTUNG**
STORAGE DEVICE FOR MOBILE PROVISIONING OF DATA ON A TECHNICAL FACILITY
DISPOSITIF MÉMOIRE PERMETTANT LA FOURNITURE MOBILE DE DONNÉES SUR UN ÉQUIPEMENT TECHNIQUE

(30) Priorität: 26.02.2019 DE 102019104881
(43) Veröffentlichungstag der Anmeldung: 02.09.2020
(73) Patentinhaber: Pilz GmbH & Co. KG, 73760 Ostfildern (DE)
(72) Erfinder: Cech, Markus, 73760 Ostfildern (DE); Muravev, Dmitry, 73760 Ostfildern (DE)
(74) Vertreter: Witte, Weller & Partner Patentanwälte mbB

(56) Entgegenhaltungen:
- EP-A1- 1 098 394
- EP-A1- 3 067 992
- DE-A1-102010 023 602
- US-A1- 2008 026 641
- Terz: "KALIBER-XS1 Industrial M12 USB Flash Drives", , 12. August 2018 (2018-08-12), XP055710831, Gefunden im Internet: URL:https://media.automation24.com/datashe et/en/TZDS9111XXEA_KALIBER-XS1.pdf [gefunden am 2020-07-01]

## Beschreibung

Die vorliegende Erfindung betrifft eine Speichervorrichtung zur mobilen Bereitstellung von Daten an einer technischen Anlage.

Um im industriellen Umfeld technische Anlagen und Einrichtungen mit Daten zu versorgen, können diese Kommunikationsschnittstellen aufweisen, die eine Datenübertragung auf das Gerät oder eine Kopplung mit einem Netzwerk ermöglichen. Während solche Kommunikationsschnittstellen für größere Anlagen oder Steuereinrichtungen sinnvoll sind, rechnen sich diese nicht für kleinere Anlagen, bei denen nur wenige Daten ausgetauscht werden müssen bzw. ein Datenaustausch nur selten stattfindet. Hier kommen vielmehr Wechseldatenträgerkonzepte zum Tragen, bei denen Wechseldatenträger eingesetzt werden, die verschiedene vorkonfigurierte Datensätze aufweisen können oder die an einer abgesetzten Einheit, wie beispielsweise einem Arbeitsplatz-PC, mit entsprechenden Daten beschrieben werden können.

Die für die Verwendung mit Wechseldatenträgern eingerichteten technischen Einrichtungen haben üblicherweise eine integrierte Aufnahme zum Anschließen eines konventionellen Datenträgers (z.B. USB-Stick oder SD-Karte), wobei die integrierte Aufnahme für die Verwendung unter erschwerten Umweltbedingungen im industriellen Umfeld entsprechend abzusichern und abzudichten ist. Dies führt dazu, dass die Konstruktion und Fertigung dieser Geräte oftmals teurer als notwendig ist, da nicht alle Anwender einen Datenaustausch über einen Wechseldatenträger brauchen bzw. diesen nur selten verwenden. Zudem hat die Härtung der integrierten Aufnahme zur Folge, dass der Austausch eines Speichermediums nur schwer und oftmals nur unter Zuhilfenahme von Werkzeugen möglich ist.

Greift man hingegen auf eine gehärtete Speichervorrichtung zurück, die eine im industriellen Umfeld gängige Schnittstelle aufweist, wie beispielsweise der unter der Bezeichnung Industrial M12 USB-Speicherstick vertriebene Datenträger der Firma TERZ Industrial Electronics GmbH, besteht das Problem, dass an dem Arbeitsplatz, an dem die Speichervorrichtung beschrieben werden soll, ebenfalls eine solche Schnittstelle oder ein entsprechender Adapter vorgesehen sein muss. Dies erschwert die Verwendung solcher gehärteten Speicher, die zudem auch um ein Vielfaches teurer sind als bspw. industriell einsetzbare Speicherkarten mit vergleichbarer Kapazität.

DE 10 2010 023602 A1 und US 2008/026641 A1 zeigen weiteren Stand der Technik.

Es ist daher eine Aufgabe der vorliegenden Erfindung, eine Speichervorrichtung zur mobilen Bereitstellung von Daten an einer technischen Anlage anzugeben, die vorstehende Nachteile vermeidet, sich kostengünstig realisieren lässt, flexibel einsetzbar ist und auch unter erschwerten Umweltbedingungen im industriellen Umfeld verwendet werden kann.

Gemäß einem Aspekt der vorliegenden Erfindung wird diese Aufgabe gelöst durch eine Speichervorrichtung zur mobilen Bereitstellung von Daten an einer technischen Einrichtung, umfassend einen ersten Steckverbinder zum mechanischen Verbinden mit einem komplementären Gegenverbinder, einen an den ersten Steckverbinder anschließenden zweiten Steckverbinder, sowie ein Gehäuse, das den ersten und den zweiten Steckverbinder umschließt, wobei der zweite Steckverbinder eingerichtet ist, in einer Aufnahme ein Speichermedium lösbar aufzunehmen und Strom- und Datenanschlüsse des Speichermediums zu kontaktieren, wenn das Speichermedium in der Aufnahme ist, wobei der erste Steckverbinder mit dem zweiten Steckverbinder gekoppelt ist und durch die Kopplung die Strom- und Datenanschlüsse des Speichermediums über den ersten Steckverbinder kontaktierbar sind, dadurch gekennzeichnet, dass der erste Steckverbinder ein Rundsteckverbinder mit einem im Querschnitt runden Verbindungselement oder ein proprietärer Steckverbinder, der einen bestimmten Steckanschluss für eine technische Einrichtung realisiert, ist, und dass der erste und der zweite Steckverbinder unbeweglich zueinander sind und zusammen als Einheit drehbar in dem Gehäuse relativ zu diesem gelagert sind.

Es ist somit eine Idee der vorliegenden Erfindung, eine Speichervorrichtung als Adapter auszubilden und in einem Gehäuse zu integrieren. Der Adapter ist einerseits mit einem Anschluss für die Verbindung mit Einrichtung im industriellen Umfeld ausgerüstet und andererseits mit einem zweiten Anschluss zur Aufnahme eines wechselbaren Speichermediums, wie beispielsweise eine handelsübliche, industrietaugliche Mikro-SD-Karte. Der Adapter ist in ein, vorzugsweise gehärtetes, Gehäuse integriert.

Die Speichervorrichtung kann folglich wie ein gehärteter Speicherstick direkt mit den im industriellen Umfeld bekannten Schnittstellen gekoppelt werden. Dies hat den Vorteil, dass bekannte und bewährte Verbindungstechniken wie beispielsweise industrielle Rundsteckverbinder zum Auslesen der Speichervorrichtung verwendet werden können. Es kann dann auf einen integrierten Anschluss für handelsübliche Datenträger wie beispielsweise einen Kartenleser an diesen Geräten verzichtet werden. Die mit den Daten zu versorgenden Geräte können somit kostengünstig hergestellt werden und in an sich bekannter Weise für die erschwerten Umweltbedingungen im industriellen Umfeld hergerichtet sein. Zudem sind bekannte Schnittstellen auch dazu eingerichtet, werkzeuglos bedient zu werden, so dass auch die Handhabung gegenüber gebräuchlichen Speicherkarten in integrierten Aufnahmen vereinfacht wird.

Die als Adapter ausgebildete Speichervorrichtung kann ferner flexibel mit handelsüblichen und aus der PC-Technik bekannten Speichermedien bestückt werden. Es können so kostengünstig verschiedene Wechseldatenträger bereitgestellt werden bzw. die Wechseldatenträger können einfach angepasst und mit neuen Daten beschrieben werden. Hierfür kann ein einfacher PC verwendet werden, ohne dass dieser eine spezielle Schnittstelle oder einen entsprechenden Adapter aufweisen muss, der über die an handelsüblichen PCs vorhandenen Anschlüsse hinausgeht. Die Bereitstellung von Daten an einer technischen Anlage wird so vereinfacht und die Handhabung durch den Anwender erleichtert. Die oben genannte Aufgabe ist damit vollständig gelöst.

In einer weiteren Ausgestaltung kann das Gehäuse einen ersten zylinderförmigen Abschnitt aufweisen, der das Verbindungselement des ersten Steckverbinders hülsenartig umgibt und ein Gewinde aufweist, insbesondere ein M12-, M8-, M23- oder ein 7/8-Zoll-Gewinde, über welches das Gehäuse zum mechanischen Verbinden des ersten Steckverbinders mit dem komplementären Gegenverbinder an diesem anschraubbar ist.

Das Verbindungselement des ersten Steckverbinders kann somit von einem zylinderförmigen Gehäuse eingefasst sein, welches ein Gewinde aufweist, mit dem der Steckverbinder an einem Gegenstück verschraubt werden kann. Das Gehäuse bildet somit ein Teil des Verbindungsmechanismus, sodass hierfür keine zusätzlichen Elemente benötigt werden. Insbesondere benötigt die Speichervorrichtung keine Überwurfmutter, wie sie üblicherweise bei Schnittstellenadaptern verwendet wird, bei denen eine bekannte Schnittstelle durch eine Erweiterung gehärtet wird.

In einer weiteren Ausgestaltung kann das Gehäuse einen zweiten Abschnitt aufweisen, der starr mit dem ersten Abschnitt gekoppelt ist und den zweiten Steckverbinder hülsenartig umgibt, sowie einen dritten Abschnitt, der das Gehäuse einseitig verschließt und lösbar an dem zweiten Abschnitt angeordnet ist.

Das Gehäuse kann somit aus drei Abschnitten bestehen, in denen der erste und der zweite Steckverbinder hülsenartig aufgenommen sind. Der erste Abschnitt umschließt das Verbindungselement und bildet das Anschlussstück zum Gegenverbinder, der zweite Abschnitt beinhaltet den zweiten Steckverbinder einschließlich der Aufnahme für das wechselbare Speichermedium und der dritte Abschnitt ist als Deckel ausgebildet, der das Gehäuse einseitig verschließbar macht. Die Abschnitte schließen nahtlos aneinander an und bilden so ein rohrartiges Behältnis, in dem der erste und der zweite Steckverbinder untergebracht sind.

In einer weiteren Ausgestaltung kann der zweite Abschnitt mit dem dritten Abschnitt verschraubt sein.

Indem der dritte Abschnitt auf dem zweiten Abschnitt aufgeschraubt ist, kann der Zugang zum Inneren des Gehäuses einfach und werkzuglos ermöglicht werden, wodurch die Handhabung der Speichervorrichtung verbessert wird. Insbesondere kann auf diese Weise ein wechselbares Speichermedium einfach und komfortabel aus der Speichervorrichtung entnommen werden, unter anderem auch dann, wenn der Adapter über die erste Steckverbindung mit einem Gegenstück verbunden ist. Gleichzeitig ermöglicht die Verschraubung eine Verbindung zum zweiten Abschnitt, die besonders einfach abgedichtet werden kann, bspw. durch einen O-Ring, so dass das Gehäuse insgesamt für eine hohe Schutzart ausgelegt sein kann.

In einer weiteren Ausgestaltung können der erste, zweite und dritte Abschnitt zusammen ein geschlossenes Gehäuse bilden, wenn der erste Steckverbinder mit dem komplementären Gegenverbinder verschraubt ist, insbesondere mit einem Schutzgrad IP67.

Das Gehäuse kann somit den ersten und den zweiten Steckverbinder vollständig verbergen, wenn der erste Steckverbinder mit einem Gegenstück verschraubt ist. Dies ermöglicht es, dass die Speichervorrichtung an der technischen Einrichtung auch während deren Betrieb befestigt sein kann. Die Speichervorrichtung stellt somit eine Erweiterung des Gehäuses der technischen Einrichtung dar, innerhalb derer das für die technische Einrichtung benötigte Speichermedium untergebracht ist. Bei der technischen Einrichtung kann so auf einen integrierten Anschluss für ein Wechselspeichermedium verzichtet werden.

In einer weiteren Ausgestaltung kann der zweite und/oder dritte Abschnitt eine Rändelung aufweisen.

Die Rändelung kann eine auf der Manteloberfläche des ersten und/oder zweiten Abschnitts eingeprägte umlaufende Gestaltabweichung sein. Durch die Rändelung kann das Gehäuse griffiger gestaltet werden, wodurch ein Abrutschen bei der Montage verhindert werden kann, wenn das Gehäuse zum Herstellen der Steckverbindung mit dem ersten Steckverbinder gedreht werden muss. Die Handhabung der Speichervorrichtung wird somit weiter vereinfacht.

Der erste und der zweite Steckverbinder können je Anschlüsse aufweisen, die nach außen weisen, um entsprechende Gegenanschlüsse zu kontaktieren. Ferner weisen der erste und der zweite Steckverbinder innere Anschlüsse auf, die miteinander gekoppelt sind, so dass der erste und der zweite Steckverbinder eine starre Einheit bilden. Hierzu können die inneren Kontakte des ersten und des zweiten Steckverbinders bspw. verlötet sein. Als Einheit sind der erste und der zweite Steckverbinder in das Gehäuse integriert, wobei das Gehäuse um diese Einheit drehbar ist, um als Teil der Steckverbindung des ersten Steckverbinders zu wirken. Diese Ausgestaltung ermöglicht es, dass die Speichervorrichtung insgesamt sehr kleinbauend gestaltet sein kann.

In einer weiteren Ausgestaltung kann der zweite Steckverbinder innerhalb des Gehäuses auf einer Leiterplatte angeordnet sein, auf der die Strom- und Datenanschlüsse als Leiterbahnen herausgeführt sind, und der erste Steckverbinder kann über die Leiterplatte mit dem zweiten Steckverbinder gekoppelt sein.

Indem der zweite Steckverbinder auf einer Leiterplatte angeordnet ist, kann auf einen handelsüblichen Steckverbinder zurückgegriffen werden, so dass dieser besonders kostengünstig realisiert werden kann. Zudem ermöglicht die Leiterplatte, dass neben den Steckverbindern weitere Elektronikkomponenten vorgesehen sein können, die beispielsweise Konvertierungs- oder Absicherungsaufgaben wahrnehmen.

In einer weiteren Ausgestaltung kann die Vorrichtung einen Leiterplattenhalter aufweisen, der die Leiterplatte in einer definierten Position relativ zu dem Gehäuse hält und drehbar in diesem gelagert ist. Über den Leiterplattenhalter ist es möglich, eine quaderförmige Leiterplatte in einem im Wesentlichen zylinderförmigen Gehäuse anzuordnen. Ferner trägt der Leiterplattenhalter dazu bei, dass ein im Querschnitt rechteckiger Steckverbinder stabil in einem runden Gehäuse gelagert werden kann.

In einer weiteren Ausgestaltung weist das Verbindungselement ein genormtes Steckgesicht auf, insbesondere gemäß IEC61076-2 und/oder IEC60352-4.

Die Speichervorrichtung kann somit unmittelbar für den Anschluss an Geräte mit genormten Schnittstellen geeignet sein.

In einer weiteren Ausgestaltung ist der zweite Steckverbinder ein Speicherkartenhalter, in den Speicherkarten, insbesondere (Mikro-)SD-Karten, als das Speichermedium einsetzbar sind.

Speicherkartenhalter werden in einer Vielzahl von elektronischen Geräten eingesetzt, um diese um wechselbaren Speicher zu erweitern. Speicherkarten bilden daher den de facto-Standard zur Speicherbereitstellung im PC- und Unterhaltungselektronikbereich. Die entsprechend günstig vorhandenen Speicherkarten können so vorteilhaft auch bei industriellen Anlagen eingesetzt werden. Gleichzeitig sind Speicherkartenleser in vielen handelsüblichen PCs oder Laptops bereits vorhanden bzw. kostengünstiger nachrüstbar als vergleichbare Schnittstellen aus dem industriellen Umfeld.

In einer weiteren Ausgestaltung kann der Rundsteckverbinder fünf oder mehr Pole aufweisen, insbesondere ein achtpoliger Verbinder sein.

Ein fünf- oder mehrpoliger Verbinder hat den Vorteil, dass ein Speichermedium über mehrere Datenleitungen angesprochen und eine Auslesegeschwindigkeit dadurch erhöht werden kann. So kann eine Mikro-SD-Karte bspw. durch die zusätzlichen Anschlüsse in einem High-Speed-Modus betrieben werden.

In einer weiteren Ausgestaltung kann der erste Steckverbinder eine Steckrichtung definieren, in der der erste Steckverbinder auf den komplementären Gegenverbinder aufsteckbar ist, und das Gehäuse kann sich rohrartig in eine durch die Steckrichtung bestimmte Längsrichtung erstrecken und im Querschnitt einen Durchmesser von kleiner oder gleich 21,5 mm aufweisen.

Die Speichervorrichtung kann somit der Größe nach einer gewöhnlichen Rundsteckverbindung entsprechen, wie sie beispielsweise auch für die Anbindung von Kabeln verwendet wird. Die Anschlüsse an der technischen Einrichtung können so mit bekannter Packungsdichte angeordnet sein. Zudem kann auch eine Adapterhöhe auf dem Niveau üblicher Rundsteckverbinder im gesteckten Zustand sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel der Speichervorrichtung in einer Explosionsdarstellung,
- Fig. 2: das Ausführungsbeispiel der Speichervorrichtung gemäß Fig. 1 in einem montierten Zustand mit geschlossenem Gehäuse,
- Fig. 3: das Ausführungsbeispiel gemäß Fig. 2 als Schnitt durch das geschlossene Gehäuse,
- Fig. 4: ein Ausführungsbeispiel der Speichervorrichtung in einer Seitenansicht,
- Fig. 5: das Ausführungsbeispiel gemäß Fig. 4 als Schnitt durch das Gehäuse, und
- Fig. 6: eine technische Einrichtung für die Verwendung mit einer Speichervorrichtung nach einer Ausführungsform der vorliegenden Erfindung.

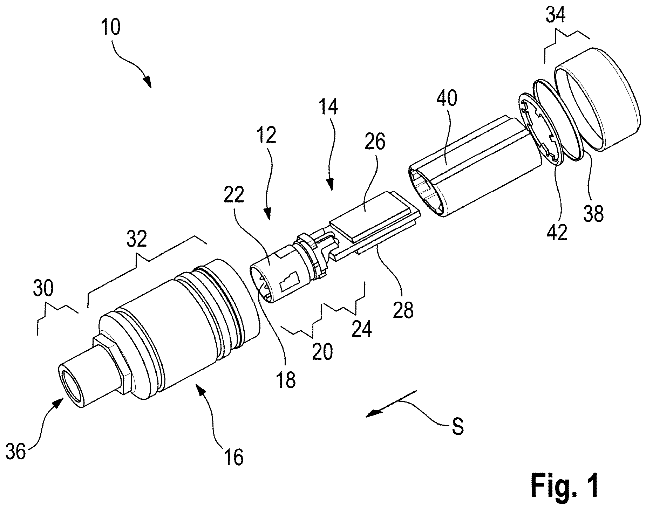

Fig. 1 zeigt ein Ausführungsbeispiel der Speichervorrichtung in einer Explosionsdarstellung. Die Speichervorrichtung ist in der Fig. 1 in seiner Gesamtheit mit der Bezugsziffer 10 bezeichnet.

Die Speichervorrichtung umfasst einen ersten und einen zweiten Steckverbinder, die zu einer Einheit gekoppelt sind, sowie ein Gehäuse 16, in das die Einheit integriert ist.

Der erste Steckverbinder 12 ist eine Schnittstelle zu einer technischen Einrichtung (hier nicht dargestellt) und mit einem an der technischen Einrichtung befindlichen komplementären Gegenverbinder koppelbar.

Der zweite Steckverbinder 14 umfasst eine Schnittstelle zu einem Speichermedium, das lösbar mit dem zweiten Steckverbinder verbunden werden kann. Der zweite Steckverbinder ist eingerichtet, Strom- und Datenanschlüsse des Speichermediums zu kontaktieren.

Die Kopplung zwischen dem ersten Steckverbinder 12 und dem zweiten Steckverbinder 14 ist so eingerichtet, dass Kontakte 18 des ersten Steckverbinders 12 die Strom- und Datenanschlüsse des mit dem zweiten Steckverbinder gekoppelten Speichermediums kontaktieren können. Die Einheit aus erstem Steckverbinder und zweitem Steckverbinder 12, 14 ist somit ein Adapter, der Strom- und Datenanschlüsse eines Speichermediums auf einen industriell genormten Steckverbinder umsetzen kann.

Der erste Steckverbinder kann, wie hier dargestellt, ein Rundsteckverbinder sein mit einem Verbindungselement 20, das einen runden Querschnitt aufweist. Alternativ kann der erste Steckverbinder 12 auch ein proprietärer schwerer Steckverbinder sein, der einen bestimmten Steckanschluss für eine technische Einrichtung realisiert. Ein solcher schwerer Steckverbinder wird auch als Heavy-Duty-Connector (HDC) bezeichnet und zeichnet sich regelmäßig durch ein besonders gehärtetes Gehäuse aus und einer anwendungsspezifischen Konfiguration.

Im hier dargestellten Ausführungsbeispiel ist das Verbindungselement 20 des Rundsteckverbinders ein männlicher Stecker mit einer hohlzylinderförmigen Ummantelung 22 und darin enthaltenen, freistehenden und in eine Steckrichtung S weisenden Kontakten 18. Die Kontakte 18 stellen über entsprechende Buchsen an einem komplementären Gegenverbinder eine elektrische Verbindung zu diesem her.

Ein Querschnitt durch das Verbindungselement 20 und die Kontakte 18 definieren ein sogenanntes Steckgesicht des Rundsteckverbinders. Im industriellen Umfeld sind verschiedene Steckgesichter bekannt und gemäß der einschlägigen Normen wie beispielsweise IEC61076-2-100 für M12-Rundsteckverbinder genormt. Neben den Kontakten 18 und dem Durchmesser der Ummantelung 22 können weitere Strukturen in der Ummantelung 22 eingefasst sein, die das Steckgesicht ergänzend definieren. Diese weiteren Strukturen dienen insbesondere einer Codierung, die ein Einstecken in einer definierten Weise festlegt, um ein fehlerhaftes Einstecken vorzubeugen. Der erste Steckverbinder 12 kann insbesondere ein nach diesen Vorschriften genormter und codierter Steckverbinder sein.

An das Verbindungselement 20 des ersten Steckverbinders 12 schließt ein Kontaktelement 24 an, über das eine Verbindung zum zweiten Steckverbinder 14 hergestellt wird. Das Kontaktelement 24 kann die Kontakte 18 aus dem Verbindungselement 20 fortsetzen und mit Kontakten des zweiten Steckverbinders 14 verbinden. Ferner kann das Kontaktelement 24 Mittel aufweisen, über die der zweite Steckverbinder 14 starr am ersten Steckverbinder 12 gehalten wird.

Der zweite Steckverbinder 14 weist eine Aufnahme 26 auf, in der ein Speichermedium lösbar aufnehmbar ist. Die Aufnahme 26 stellt somit eine Schnittstelle zu einem Speichermedium dar, über welche Strom- und Datenanschlüsse des Speichermediums kontaktierbar sind.

Die Aufnahme 26 kann beispielsweise ein Kartenleser sein, in den Speicherkarten einlegbar sind. Die Kopplung zwischen dem ersten Steckverbinder 12 und dem zweiten Steckverbinder ist so eingerichtet, dass eine in den Kartenleser 26 eingelegte Speicherkarte über die Kontakte 18 im ersten Steckverbinder 12 kontaktierbar ist. Die Aufnahme 26 des zweiten Steckverbinders 14 kann hierzu auf einer Leiterplatte 28 integriert sein. Die Leiterplatte 28 wiederum kann an dem Kontaktelement 24 befestigt sein, so dass die über das Kontaktelement 24 herausgeführten Kontakte 18 Leiterbahnen auf der Leiterplatte 28 kontaktieren, um die Kontakte 18 des ersten Steckverbinders 12 mit den über die Leitbahnen herausgeführten Strom- und Datenanschlüsse des Speichermedium zu verbinden.

In einem anderen Ausführungsbeispiel kann die Aufnahme 26 auch eine Kommunikationsschnittstelle sein, wie beispielsweise eine USB-Schnittstelle, in die ein Speichermedium einsteckbar ist. Auch diese Schnittstelle kann in an sich bekannter Weise auf einer Leiterplatte integriert sein. Zusätzlich kann die Leiterplatte 28 noch Elektronikkomponenten umfassen, welche bspw. ein entsprechendes Protokoll für die Kommunikationsschnittstelle implementieren.

Das Gehäuse 16, in dem der erste und der zweite Steckverbinder 12, 14 enthalten sind, kann mehrere Abschnitte aufweisen. Insbesondere kann ein Abschnitt des Gehäuses 16 so eingerichtet sein, dass dieser ein Teil der mit dem ersten Steckverbinder 12 herstellbaren Verbindung ist. Mit anderen Worten der erste Steckverbinder 12 und Teile des Gehäuses 16 definieren zusammen die Verbindungstechnik.

Bspw. kann das Gehäuse 16 einen ersten Abschnitt 30 aufweisen, welcher das Verbindungselement 20 im montierten Zustand umschließt und welcher mit dem Gegenverbinder zusammen wirkt, um die Verbindung zwischen dem ersten Steckverbinder 12 und dem Gegenverbinder herzustellen bzw. zu sichern. Auf einer Oberfläche des ersten Abschnitts 30 kann hierfür ein Gewinde vorgesehen sein, welches mit einem Gegengewinde an dem komplementären Gegenverbinder in Wechselwirkung tritt, um das Gehäuse 16 an dem komplementären Gegenverbinder zu befestigen. Es versteht sich, dass die Verbindung nicht auf eine Schraubverbindung beschränkt ist, sondern für die Verbindung auch andere Mittel an dem Steckverbinder oder dem relevanten Gehäuseteil vorgesehen sein können. So können in einer anderen Ausführungsform auch Rastmittel, die mit entsprechenden Aussparungen am komplementären Gegenverbinder in Wechselwirkung treten, an dem Gehäuseteil angeordnet sein.

An den ersten Abschnitt 30 des Gehäuses 16 kann ein weiterer Abschnitt anschließen, in dem im Wesentlichen der zweite Steckverbinder 14 und ein in diesen eingestecktes Speichermedium angeordnet sind. Dieser zweite Abschnitt 32 kann unmittelbar nach dem ersten Abschnitt 30 folgen und starr mit diesem verbunden sein. Der zweite Abschnitt 32 entspricht somit dem Kern des Gehäuses 16 und bildet das eigentlich Behältnis, in dem die Komponenten der Speichervorrichtung untergebracht sind.

Schließlich kann auf den zweiten Abschnitt 32 ein dritter Abschnitt 34 folgen, der das Gehäuse 16 einseitig verschließt. Der dritte Abschnitt 34 entspricht somit einer Abdeckung, die lösbar auf den zweiten Abschnitt 32 aufgebracht werden kann, um das Gehäuse 16 zu verschließen.

Im montierten Zustand bilden die drei Abschnitte 30, 32, 34 ein geschlossenes Behältnis, in dem der erste und der zweite Steckverbinder vollständig eingefasst sind und das nur im Bereich des Verbindungselements 20 über eine Öffnung 36 verfügt, so dass der erste Steckverbinder 12 mit einem Gegenverbinder in Wechselwirkung treten kann. Über die Öffnung 36 kann das Verbindungselement 20 des ersten Steckverbinders 12 somit mit einem entsprechenden komplementären Gegenverbinder verbunden werden, wobei die Verbindung so eingerichtet ist, dass das Gehäuse 16 im verbundenen Zustand vollständig verschlossen und dicht ist, so dass weder Staub noch Wasser in das Innere des Gehäuses 16 eindringen können. Das Gehäuse 16 kann somit im montierten Zustand den Anforderungen an eine Schutzart von mindestens IP67 genügen.

Der dritte Abschnitt 34 ist vom zweiten Abschnitt 32 lösbar, so dass das Gehäuse 16 an einer vorzugsweise der Öffnung 36 gegenüberliegenden Seite geöffnet werden kann, um einen physischen Zugriff auf das Speichermedium in der Aufnahme 26 zu ermöglichen. Insbesondere kann der dritte Abschnitt 34 ein Deckel sein, der auf den zweiten Abschnitt aufgeschraubt wird und über den das in die Aufnahme 26 eingelegte Speichermedium zugänglich und aus dem Gehäuse 16 entnehmbar ist. Über den Deckel kann somit das Gehäuse 16 geöffnet werden, um das Speichermedium zu tauschen, wobei der erste Steckverbinder 12 weiterhin eingesteckt sein kann. Wie in Fig. 1 gezeigt, kann in den als Deckel ausgebildeten Abschnitt 34 eine Dichtung integriert oder einlegbar sein, um das Gehäuse 16 abzudichten. Die Dichtung kann ein O-Ring 38 sein. Ein O-Ring 38 ermöglicht eine besonders einfache und gleichzeitig zuverlässige Abdichtung des Gehäuses 16 gegen Staub und Wasser.

Sofern die Speichervorrichtung eine Leiterplatte 28 zur Kopplung des ersten und des zweiten Steckverbinders 12, 14 aufweist, kann ferner ein Leiterplattenhalter 40 vorgesehen sein. An dem Leiterplattenhalter 40 kann die Leiterplatte 28 befestigt sein, so dass diese innerhalb des Gehäuses 16 beweglich gelagert ist. Zur beweglichen Lagerung kann der Leiterplattenhalter 40 einen oder mehrere Haltering 42 aufweisen, die einen Durchmesser haben, der dem Innendurchmesser des Gehäuses 16 an einer oder an unterschiedlichen Stellen entspricht. Über den oder die Halteringe 42 kann der Leiterplattenhalter 40 im Gehäuse 16 gehalten werden, so dass diesem nur ein Drehbewegung um die eigene Längsachse möglich ist. Anstelle von Halteringen kann der Leiterplattenhalter 40 aber auch einen Körper aufweisen, der passgenau in das Gehäuse 16 einführbar ist.

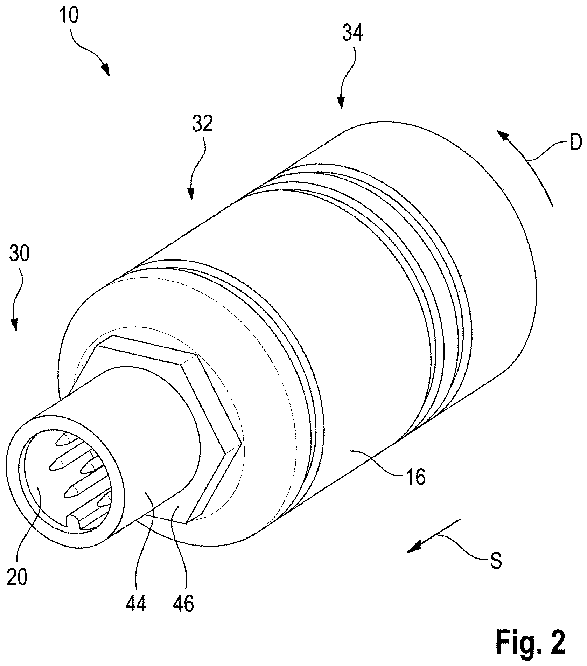

Fig. 2 zeigt das Ausführungsbeispiel der Speichervorrichtung gemäß Fig. 1 in einem montierten Zustand mit geschlossenem Gehäuse 16.

Im montierten Zustand umschließt das Gehäuse 16 den ersten und den zweiten Steckverbinder 12, 14 vollständig, insbesondere so, dass das Gehäuse 16, wenn der erste Steckverbinder 12 mit einem Gegenverbinder verbunden ist, eine Schutzart IP67 aufweist. Die in Fig. 1 einzeln dargestellten Abschnitte 30, 32, 34 des Gehäuses 16 sind somit unmittelbar miteinander verbunden und bilden ein geschlossenes Behältnis. Das Behältnis kann Teil der durch den ersten Steckverbinder realisierten Verbindung sein oder zumindest bei der Verbindung unterstützend mitwirken, wenn eine Verbindung zwischen dem ersten Steckverbinder 12 und dem komplementären Gegenverbinder hergestellt wird.

Insbesondere kann ein Gewinde 44 auf der Mantelfläche des ersten Abschnitts 30 vorgesehen sein, über welches das Gehäuse 16 an einem entsprechenden Gegengewinde befestigt und gesichert werden kann. Das zylinderartige Gehäuse 16 kann hierzu in Drehrichtung D gedreht werden, so dass sich das Gewinde 44 samt Gehäuse 16 und Verbindungselement 20 in Steckrichtung S auf den komplementären Gegenverbinder zieht. Das Gehäuse 16 kann somit relativ zu den drehbargelagerten ersten und zweiten Steckverbinder 12, 14 gedreht werden.

Um die Montage zu erleichtern, kann unterstützend hierfür das Gehäuse 16 einen vierten Gehäuseabschnitt 46 aufweisen, der vorzugsweise unmittelbar an den ersten Abschnitt 30 anschließt und einen sechseckigen Querschnitt hat, um an diesem mit einem entsprechenden Maulschlüssel ansetzen zu können.

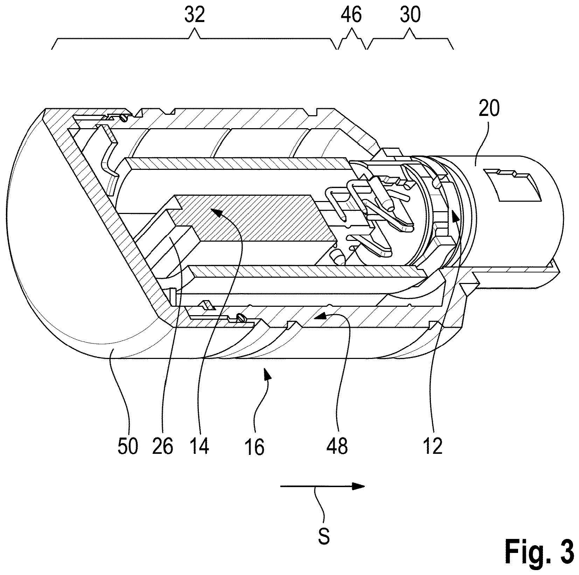

Fig. 3 zeigt das vorherige Ausführungsbeispiel gemäß Fig. 2 in einer Querschnittsdarstellung.

Das Gehäuse 16 kann, wie hier dargestellt, aus einzelnen Gehäuseteilen zusammengesetzt sein. Insbesondere kann das Gehäuse aus einem ersten und einen zweiten Teil 48, 50 zusammengesetzt sein.

Das erste Teil 48 ist rohrartig und kann so geformt sein, dass es den ersten, zweiten und vierten Abschnitt des Gehäuses 16, wie zuvor beschrieben, einstückig ausbildet. Das zweite Teil 50 bildet den deckelartigen dritten Abschnitt 34 und verschließt das zusammengesetzte Gehäuse 16 einseitig. Das rohrartige erste Teil 48 ist somit auf einer Seite durch das Verbindungselement 20 verschlossen und auf der anderen Seite durch das zweite Teil 50, welches als Abdeckung auf das erste Teil 48 gesteckt oder geschraubt ist. Das zweite Teil 50 ist von dem ersten Teil 48 lösbar und kann von diesem abgenommen werden, um den im Inneren liegenden zweiten Steckverbinder 14 zugänglich zu machen.

Vorteilhaft ist der zweite Steckverbinder 14 so hinter dem zweiten Teil 50 in das Gehäuse 16 integriert, dass ein Speichermedium, wie beispielsweise eine Speicherkarte, entgegen der Steckrichtung S aus der Aufnahme 26 entnehmbar ist. Die Einheit aus erstem und zweitem Steckverbinder 12, 14 erstreckt sich somit vorzugsweise in Steckrichtung S, so dass ein Querschnitt des Gehäuses 16 möglichst klein gehalten werden kann. In einer bevorzugten Ausführungsform ist der Durchmesser kleiner oder gleich 21,5 mm und damit nicht größer als ein an einem M12-Anschluss gesteckter Kabelverbinder.

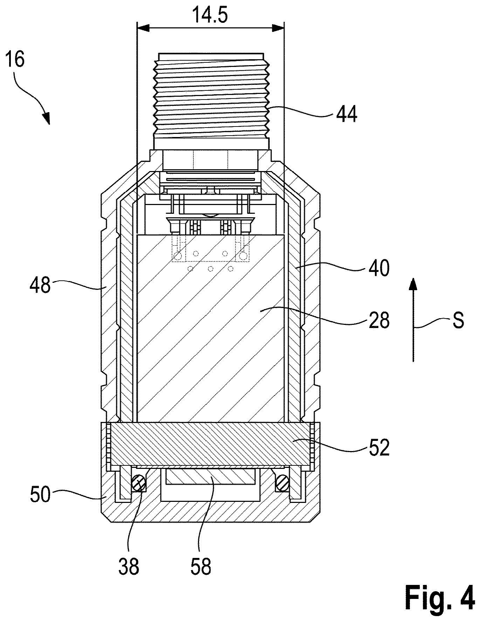

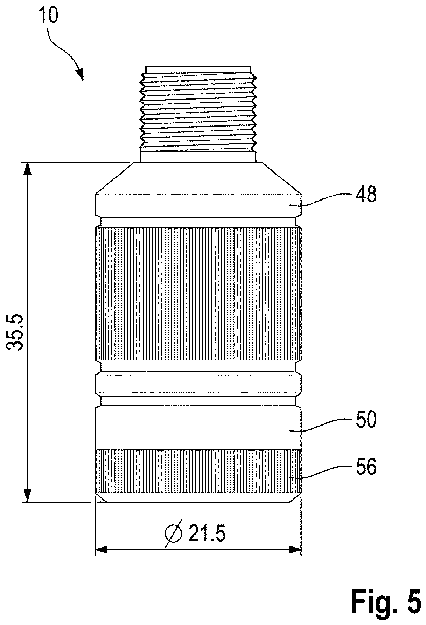

Fig. 4 und 5 zeigen ein bevorzugtes Ausführungsbeispiel der Speichervorrichtung in einer Seitenansicht und in einer Schnittdarstellung. Gleiche Bezugszeichen bezeichnen gleiche Teile wie zuvor in Bezug auf die Fig. 1 bis 3.

Das Gehäuse 16 setzt sich auch in diesem Ausführungsbeispiel aus einem ersten Teil 48 und einem zweiten Teil 50 zusammen. Das erste Teil 48 ist rohrartig und hat an beiden Enden jeweils ein Außengewinde 44, 52. Das erste Gewinde 44 dient in der zuvor beschriebenen Weise zum Festmachen des Gehäuses 16 an einem komplementären Gegenverbinder. Auf das zweite Gewinde 52 kann das deckelförmige zweite Teil 50 geschraubt werden, das hierfür ein entsprechendes Gegengewinde 54 aufweist. Ein O-Ring 38 dichtet das Innere des Gehäuses 16 ab, wenn das zweite Teil 50 auf das erste Teil 48 aufgeschraubt ist.

Eine Rändelung 56 auf der äußeren Oberfläche des zweiten Teils 50 erleichtert das Öffnen und Schließen des Gehäuses 16. Eine weitere Rändelung auf der Außenfläche des ersten Teils 48 erleichtert die Handhabung beim Befestigen der Speichervorrichtung an der technischen Einrichtung.

Im Inneren des Gehäuses 16 befinden sich der erste und zweite Steckverbinder 12, 14. Der erste und zweite Steckverbinder 12, 14 sind hier über eine Leiterplatte 28 gekoppelt. Bei der Leiterplatte 28 kann es sich um eine handelsübliche Leiterplatte mit ein oder mehreren Ebenen (Schichten) handeln, die sich parallel zur Steckrichtung S erstrecken. Der erste und der zweite Steckverbinder 12, 14 bilden im dargestellten Ausführungsbeispiel eine Flachbaugruppe, wobei der erste Steckverbinder 12 ein "bedrahtetes" Bauelement ist und in Durchsteckmontage an der Leiterplatte 28 befestigt ist, und wobei der zweite Steckverbinder 14 durch Oberflächenmontage mittels lötfähiger Anschlussflächen direkt auf die Leiterplatte gelötet ist. Die Kombination beider Montagetechniken hat hier den Vorteil einer höheren mechanischen Stabilität.

Die auf der Leiterplatte 28 angeordnete Aufnahme (hier nicht dargestellt) kann ein Speicherkartenleser sein, in den eine Speicherkarte 58 einsteckbar ist. Die Speicherkarte 58 kann eine handelsübliche, industrietaugliche Mikro-SD-Karte sein. Insbesondere kann die Speicherkarte auch eine SD-Karte sein, die in einem "High-speed SD-Modus" betreibbar ist, da über einen Rundsteckverbinder fünf oder mehr Pole zum Anschluss der Karte bereitgestellt werden können und so zusätzliche Datenleitungen nutzbar sind. Mikro-SD-Karten sind besonders gut geeignet, da diese nicht viel breiter sind als der Durchmesser eines M12-Rundsteckverbinders und somit die Speichervorrichtung besonders schmal ausgebildet sein kann.

Die Leiterplatte 28 kann ferner in einem Leiterplattenhalter 40 angeordnet sein, der passgenau in das erste Teil 48 einsetzbar ist. Der Leiterplattenhalter 40 ist drehbeweglich in dem ersten Teil 48 gelagert, so dass das erste Teil 48 um den feststehenden Leiterplattenhalter 40 gedreht werden kann. Im Übrigen liegt der Leiterplattenhalter 40 zumindest teilweise bündig an den Innenflächen des ersten und des zweiten Teils 48, 50 an, so dass der Leiterplattenhalter 40 im Gehäuse 16 gedreht, jedoch nicht verschoben, werden kann.

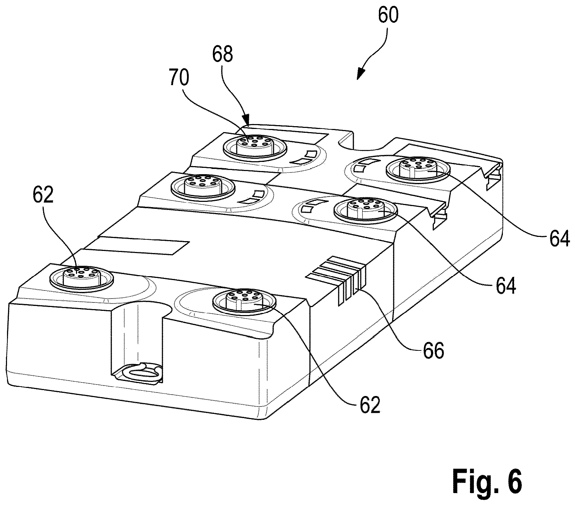

Fig. 6 zeigt exemplarisch eine technische Einrichtung, an der eine Speichervorrichtung im Sinne dieser Offenbarung verwendet werden kann.

Die technische Einrichtung ist hier eine Peripherieeinheit 60, die verwendet wird, um technische Anlagen und deren zugehörige Sensoren und Aktoren mit einer Steuerung zu verbinden.

Die Peripherieeinheit 60 kann bspw. Kommunikationsschnittstellen 62 zur Verbindung mit einem Kommunikationsmedium sowie Ein- und Ausgänge 64 zur Kopplung mit den Sensoren und Aktoren der technischen Anlage aufweisen. Über die Kommunikationsschnittstellen 62 können Prozessdaten kommuniziert werden, beispielsweise über eine Verbindung zu einem Feldbus oder einem anderweitigen Netzwerk. Alternativ kann eine Peripherieeinheit auch direkt mit einer Steuereinheit verbunden sein.

Die Eingänge können Prozessdaten von der technischen Anlage empfangen, verarbeiten und/oder weiterleiten. Über die Ausgänge 64 können anhand der Prozessdaten die Aktoren der technischen Anlage gesteuert werden. Anzeigemittel 66 können den gegenwärtigen Zustand der Ein- und Ausgänge 64 anzeigen.

Peripherieeinheiten dieser Art sind dazu ausgelegt, dezentral im Feld verwendet zu werden, um einen Installations- und Wartungsaufwand einer technischen Anlage zu reduzieren sowie Platz im Schaltschrank zu schaffen. Die Peripherieeinheiten müssen daher regelmäßig in einem gehärteten und schmutz- und wasserabweisenden IP67-Gehäuse untergebracht sein, um den erschwerten Umweltbedingungen im Feld standhalten zu können. Ebenso müssen die Anschlüsse für die Schnittstellen sowie Ein- und Ausgänge an die erschwerten Umweltbedingungen angepasst sein.

Trotz unterschiedlicher Funktion der Kommunikationsschnittstellen 62 und der Ein- und Ausgänge 64 wird regelmäßig auf einen einheitlichen Anschlusstyp zurückgegriffen, um den Konstruktionsaufwand der Peripherieeinheit 60 möglichst gering zu halten. Bewährt haben sich im Bereich der Automatisierungstechnik verschraubbare Rundsteckverbinder, die eine einfache, wenig fehleranfällige und zumeist werkzeuglose Montage ermöglichen und gleichzeitig eine hohe Schutzart (IP67 oder größer) gewährleisten können.

Die Konfiguration derartiger Peripherieeinheiten 60 kann zur Kostenersparnis auf Wechselspeicherkonzepten basieren. Das heißt, üblicherweise werden auf den Peripherieeinheiten Anschlüsse integriert, in denen Wechselspeichermedien aufgenommen werden können, die die Konfigurationsdaten beinhalten, anhand derer die Peripherieeinheit konfiguriert wird. Durch das Wechselspeicherkonzept können die Peripherieeinheiten einfach konfiguriert werden und zudem ist ein problemloser Gerättausch möglich, da lediglich das Wechselspeichermedium umgesteckt werden muss.

Mit einer Speichervorrichtung gemäß der vorliegenden Offenbarung kann dieses Wechselspeicherkonzept weiter vereinfacht werden. Insbesondere kann auf eine integrierte Speicherkartenlesevorrichtung verzichtet werden, da bei einer Speichervorrichtung gemäß der vorliegenden Offenbarung lediglich ein entsprechender Verbinder benötigt wird. Ein solcher Verbinder kann an der Peripherieeinheit 60 durch einen weiteren Anschluss 68 implementiert sein, der in gleicher Weise ausgebildet ist wie ein Anschluss der Kommunikationsschnittstellen 62 bzw. der Ein- und Ausgänge 64. Es kann somit für den Wechselspeicher auf die gleiche und industriebewährte Verbindungstechnik zurückgegriffen werden, die bei der Kommunikationsschnittstelle bzw. den Ein- und Ausgängen Anwendung findet. Gleichzeitig kann jedoch ein Speichermedium verwendet werden, das originär nicht für eine solche Verbindungstechnik eingerichtet ist.

Ferner kann die Konfiguration der Peripherieeinheit 60 durch einfaches Einstecken bzw. Austauschen einer Speicherkarte erfolgen, ohne dass die Speicherkarte im Feld gewechselt werden muss. Handhabung und Wartung können so durch die neue Speichervorrichtung vereinfacht werden.

Der Schutzbereich der vorliegenden Erfindung wird durch die nachfolgenden Ansprüche bestimmt und der Schutzbereich ist nicht durch die in der Beschreibung erläuterten oder in den Figuren gezeigten Merkmale beschränkt.

## Patentansprüche

1. Speichervorrichtung (10) zur mobilen Bereitstellung von Daten an einer technischen Einrichtung, umfassend:
einen ersten Steckverbinder (12) zum mechanischen Verbinden mit einem komplementären Gegenverbinder (70), einen an den ersten Steckverbinder (12) anschließenden zweiten Steckverbinder (14), sowie ein Gehäuse (16), das den ersten und den zweiten Steckverbinder (12, 14) umschließt,
wobei der zweite Steckverbinder (14) eingerichtet ist, in einer Aufnahme (26) ein Speichermedium lösbar aufzunehmen und Strom- und Datenanschlüsse des Speichermediums zu kontaktieren, wenn das Speichermedium in der Aufnahme (26) ist,
wobei der erste Steckverbinder (12) mit dem zweiten Steckverbinder (14) gekoppelt ist und durch die Kopplung die Strom- und Datenanschlüsse des Speichermediums über den ersten Steckverbinder (12) kontaktierbar sind,
wobei der erste Steckverbinder (12) ein Rundsteckverbinder mit einem im Querschnitt runden Verbindungselement (20) oder ein proprietärer schwerer Steckverbinder, der einen bestimmten Steckanschluss für eine technische Einrichtung realisiert, ist, und **dadurch gekennzeichnet, dass** der erste und der zweite Steckverbinder (12, 14) unbeweglich zueinander sind und zusammen als Einheit drehbar in dem Gehäuse (16) relativ zu diesem gelagert sind.

2. Speichervorrichtung nach Anspruch 1, wobei das Gehäuse (16) einen ersten zylinderförmigen Abschnitt (30) aufweist, welcher das Verbindungselement (20) des ersten Steckverbinders (12) hülsenartig umgibt und ein Gewinde (44) aufweist, insbesondere ein M12-, M8-, M23- oder ein 7/8-Zoll-Gewinde, über welches das Gehäuse (16) zum mechanischen Verbinden des ersten Steckverbinders (12) mit dem komplementären Gegenverbinder (70) an diesen anschraubbar ist.

3. Speichervorrichtung nach Anspruch 1 oder 2, wobei das Verbindungselement (20) ein genormtes Steckgesicht aufweist, insbesondere gemäß IEC61076-2 und/oder IEC60352-4.

4. Speichervorrichtung nach einem der Ansprüche 2 bis 3, wobei das Gehäuse (16) einen zweiten Abschnitt (32) aufweist, der starr mit dem ersten Abschnitt (30) gekoppelt ist und den zweiten Steckverbinder (14) hülsenartig umgibt, sowie einen dritten Abschnitt (34), der das Gehäuse (16) einseitig verschließt und lösbar an dem zweiten Abschnitt (32) angeordnet ist.

5. Speichervorrichtung nach Anspruch 4, wobei der zweite Abschnitt (32) mit dem dritten Abschnitt (34) verschraubt ist.

6. Speichervorrichtung nach Anspruch 5, wobei der erste, zweite und dritte Abschnitt (30, 32, 34) ein geschlossenes, staub- und wasserdichtes Gehäuse bilden, wenn der erste Steckverbinder (12) mit dem komplementären Gegenverbinder (70) verschraubt ist, insbesondere mit einem Schutzgrad IP67.

7. Speichervorrichtung nach einem der Ansprüche 4 bis 6, wobei der zweite und/oder dritte Abschnitt (32, 34) eine Rändelung aufweist.

8. Speichervorrichtung nach einem der vorherigen Ansprüche, wobei der zweite Steckverbinder (14) innerhalb des Gehäuses (16) auf einer Leiterplatte (28) angeordnet ist, auf der die Strom- und Datenanschlüsse als Leiterbahnen herausgeführt sind, und der erste Steckverbinder (12) über die Leiterplatte (28) mit dem zweiten Steckverbinder (14) gekoppelt ist.

9. Speichervorrichtung nach Anspruch 8, ferner aufweisend einen Leiterplattenhalter (40), der die Leiterplatte (28) in einer definierten Position relativ zu dem Gehäuse (16) hält und drehbar in diesem gelagert ist.

10. Speichervorrichtung nach einem der vorherigen Ansprüche, wobei der zweite Steckverbinder (14) ein Speicherkartenhalter ist, in den Speicherkarten, insbesondere SD-Karten, als das Speichermedium einsetzbar sind.

11. Speichervorrichtung nach einem der vorherigen Ansprüche, wobei, wenn der erste Steckverbinder (12) ein Rundsteckverbinder ist, der Rundsteckverbinder fünf oder mehr Pole aufweist, insbesondere ein achtpoliger Verbinder ist.

12. Speichervorrichtung nach einem der vorherigen Ansprüche, wobei, wenn der erste Steckverbinder (12) ein Rundsteckverbinder ist, der erste Steckverbinder (12) eine Steckrichtung (S) definiert, in der der erste Steckverbinder (12) auf den komplementären Gegenverbinder (70) aufsteckbar ist, das Gehäuse (16) sich rohrartig in eine durch die Steckrichtung (S) bestimmte Längsrichtung erstreckt, und das Gehäuse (16) im Querschnitt einen Durchmesser von kleiner oder gleich 21,5 mm aufweist.

## Claims

1. Storage device (10) for mobile provision of data at a technical installation, comprising:
a first connector (12) for mechanical connection to a complementary mating connector (70), a second connector (14) adjoining the first connector (12), and a housing (16) enclosing the first and second connectors (12, 14),
wherein the second connector (14) is configured to releasably receive a storage medium in a receptacle (26) and to contact power and data connections of the storage medium when the storage medium is in the receptacle (26),
wherein the first connector (12) is coupled to the second connector (14) and, as a result of the coupling, the power and data connections of the storage medium can be contacted via the first connector (12), and
wherein the first connector (12) is a round plug connector with a connecting element (20) having a circular cross-section or a heavy-duty connector realising a specific connection for a technical installation,
**characterized in that**
the first connector (12) and the second connector (14) are immovable relative to each other and together as a unit are rotatably mounted in the housing (16) relative thereto.

2. The storage device according to claim 1, wherein the housing (16) comprises:
a first cylindrical section (30) which surrounds the connecting element (20) of the first connector (12) in a sleeve-like manner, and
a thread (44), in particular an M12, M8, M23 or a 7/8-inch thread, via which the housing (16) can be screwed onto the complementary mating connector (70) for the mechanical connection of the first connector (12) to the complementary mating connector.

3. The storage device according to claim 1 or 2, wherein the connecting element (20) has a standardized mating face, in particular according to IEC61076-2 and/or IEC60352-4.

4. The storage device according to any one of claims 2 to 3, wherein the housing (16) has a second section (32) which is rigidly coupled to the first section (30) and surrounds the second connector (14) in a sleeve-like manner, and a third section (34) which closes the housing (16) on one side and is detachably arranged on the second section (32).

5. The storage device according to claim 4, wherein the second section (32) is screwed to the third section (34).

6. The storage device according to claim 5, wherein the first section, the second section and the third section (30, 32, 34) form a closed, dust and watertight housing when the first connector (12) is screwed to the complementary mating connector (70), in particular in compliance with IP67.

7. The storage device according to any one of claims 4 to 6, wherein the second and/or third section (32, 34) has a knurling.

8. The storage device according to one of the previous claims, wherein the second connector (14) is arranged within the housing (16) on a printed circuit board (28) on which the power and data connections are led out as conductor tracks, and the first connector (12) is coupled to the second connector (14) via the printed circuit board (28).

9. The storage device according to claim 8, further comprising a circuit board holder (40) which holds the circuit board (28) in a defined position relative to the housing (16) and is rotatably mounted therein.

10. The storage device according to any one of the previous claims, wherein the second connector (14) is a memory card holder, in which memory cards, in particular SD cards, can be inserted as the storage medium.

11. The storage device according to any one of the previous claims, wherein, in case the first connector (12) is a round plug connector, the round plug connector has five or more pins, in particular being an eight-pin connector.

12. The storage device according to any one of the previous claims, wherein, in case the first connector (12) is a round plug connector, the first connector (12) defines a plug-in direction (S) in which the first connector (12) can be plugged onto the complementary mating connector (70), the housing (16) extends in a tubular manner in a longitudinal direction determined by the plug-in direction (S), and the housing (16) has a diameter of less than or equal to 21.5 mm in cross-section.

## Revendications

1. Dispositif de stockage (10) destiné à fournir de manière mobile des données dans une installation technique, ledit dispositif de stockage comprenant :
un premier connecteur enfichable (12) destiné à être relié mécaniquement à un connecteur homologue complémentaire (70), un deuxième connecteur enfichable (14) contigu au premier connecteur enfichable (12), ainsi qu'un boîtier (16) qui renferme les premier et deuxième connecteurs enfichables (12, 14),
le deuxième connecteur enfichable (14) étant conçu pour recevoir de manière amovible un support de stockage dans un logement (26) et pour venir en contact avec les bornes d'alimentation et de données du support de stockage lorsque le support de stockage est dans le logement (26),
le premier connecteur enfichable (12) étant accouplé au deuxième connecteur enfichable (14) et pouvant venir en contact par accouplement avec les bornes d'alimentation et de données du support de stockage par le biais du premier connecteur enfichable (12),
le premier connecteur enfichable (12) étant un connecteur enfichable rond pourvu d'un élément de liaison (20) de section ronde ou un connecteur enfichable lourd propriétaire qui réalise une borne enfichable déterminée destinée à une installation technique, et
**caractérisé en ce que** les premier et deuxième connecteurs enfichables (12, 14) sont immobiles l'un par rapport à l'autre et sont montés dans le boîtier (16) de manière à pouvoir tourner conjointement en tant qu'unité par rapport à celui-ci.

2. Dispositif de stockage selon la revendication 1, le boîtier (16) comportant une première portion cylindrique (30) qui entoure l'élément de liaison (20) du premier connecteur enfichable (12) à la manière d'un manchon et qui comporte un filetage (44), en particulier un filetage M12, M8, M23 ou 7/8 de pouces qui permet de visser le boîtier (16) au connecteur enfichable homologue complémentaire (70) afin de relier mécaniquement le premier connecteur enfichable (12) à celui-ci.

3. Dispositif de stockage selon la revendication 1 ou 2, l'élément de liaison (20) comportant une face d'enfichage normalisée, notamment selon IEC61076-2 et/ou IEC60352-4.

4. Dispositif de stockage selon l'une des revendications 2 à 3, le boîtier (16) comportant une deuxième portion (32) qui est accouplée rigidement à la première portion (30) et qui entoure le deuxième connecteur enfichable (14) à la manière d'un manchon, ainsi qu'une troisième portion (34) qui ferme le boîtier (16) sur un côté et qui est disposée de manière amovible sur la deuxième portion (32).

5. Dispositif de stockage selon la revendication 4, la deuxième portion (32) étant vissée à la troisième portion (34).

6. Dispositif de stockage selon la revendication 5, les première, deuxième et troisième portions (30, 32, 34) formant un boîtier fermé, étanche à la poussière et à l'eau lorsque le premier connecteur enfichable (12) est vissé au connecteur enfichable homologue complémentaire (70), notamment avec un degré de protection IP67.

7. Dispositif de stockage selon l'une des revendications 4 à 6, la deuxième et/ou la troisième portion (32, 34) comportant un moletage.

8. Dispositif de stockage selon l'une des revendications précédentes, le deuxième connecteur enfichable (14) étant disposé à l'intérieur du boîtier (16) sur une carte de circuit imprimé (28) au niveau de laquelle les bornes d'alimentation et de données sortent sous la forme de cosses de conducteur, et le premier connecteur enfichable (12) étant accouplé au deuxième connecteur enfichable (14) par le biais de la carte de circuit imprimé (28).

9. Dispositif de stockage selon la revendication 8, comprenant en outre un support de carte de circuit imprimé (40) qui maintient la carte de circuit imprimé (28) dans une position définie par rapport au boîtier (16) et qui est logé à rotation dans celui-ci.

10. Dispositif de stockage selon l'une des revendications précédentes, le deuxième connecteur enfichable (14) étant un support de carte mémoire dans lequel des cartes mémoire, en particulier des cartes SD, peuvent être insérées comme support de stockage.

11. Dispositif de stockage selon l'une des revendications précédentes, lorsque le premier connecteur enfichable (12) est un connecteur enfichable rond, le connecteur enfichable rond comportant cinq broches ou plus, en particulier un connecteur enfichable à huit broches.

12. Dispositif de stockage selon l'une des revendications précédentes, lorsque le premier connecteur enfichable (12) est un connecteur enfichable rond, le premier connecteur enfichable (12) définissant une direction d'enfichage (S) dans laquelle le premier connecteur enfichable (12) peut être enfiché sur le connecteur enfichable homologue complémentaire (70), le boîtier (16) s'étendant à la manière d'un tube dans une direction longitudinale déterminée par la direction d'insertion (S), et le boîtier (16) ayant en coupe transversale un diamètre inférieur ou égal à 21,5 mm.
